# EUROPEAN PATENT APPLICATION

(11) **EP 4 311 772 A1**
(43) Date of publication of application: **31.01.2024**
(21) Application number: 22187896.0
(22) Date of filing: 29.07.2022
(51) Int. Cl.: B64D 11/04, H02J 7/34, H02J 1/14, H02J 7/00

(54) **POWER CONTROL ARCHITECTURE**

(71) Applicant: B/E Aerospace, Inc., Winston Salem, NC 27105 (US)
(72) Inventor: REMEEUS, Richard, Eindhoven (NL); MULDERS, Dennis, Nieuwegein (NL); DOUMA, Theo, Veenendaal (NL)
(74) Representative: Dehns

(57) **Abstract**

A power control system in which power from a power supply is buffered until a predetermined level of buffered power is available at which time the system activates a device to function powered by the buffered power. Thus, by buffering the available power, a higher power requirement load can be operated periodically e.g. data can be transmitted to/from a wireless transceiver periodically.

## Description

### TECHNICAL FIELD

This disclosure is concerned with powering devices, circuits or systems that require more power for operation than is available from the input power to the systems, for example, but not only, for powering wireless transmission to and from galley equipment in an aircraft.

### BACKGROUND

In many fields where electronic communication is required between circuits or devices, or loads need to be driven, there are constraints on available input power and also on available space, and so the power required for the operation of the equipment is actually greater than the input power.

As an example, aircraft, including commercial aircraft, are commonly equipped with a galley for food and beverage preparation. A galley of an aircraft may typically include several galley inserts or equipment such as ovens, refrigerators, coffee machines, chillers, kettles, trash compactors etc. In order to ensure proper galley equipment operation, it may be desirable for e.g. a flight attendant to communicate with a galley insert to e.g. input commands, change settings, and/or receive data such as operation status data, or for fault diagnosis and the like. Whilst much of this communication can be done by manual interaction with the equipment, there are situations and settings in which wireless communication with the inserts or between inserts is desirable. Galley inserts can be equipped with wireless transceivers to transmit data to and/or receive data from another device or circuit e.g. remotely to/from a flight attendant device or to/from another insert or other circuit or device on the aircraft. Such wireless transceivers may be provided along with other circuitry on a connectivity interface board (CIB) of the galley insert. Because of space, power and weight constraints in aircraft, each insert is optimized to provide internal power and therefore does not have any extra internal power 'budget' for other add-ons.

Therefore, the internal power budget for the CIB may be limited. As an example, a typical CIB may have a power limit of 750 mW. A wireless transceiver, however, requires a relatively large amount of power for radio calibration and data transmission, often requiring more than the power limit for the CIB, for data communication. Typically, therefore, although the communication technology is available for communicating wirelessly with and between galley inserts, they do not have sufficient power for operation of the communication components. Aircraft applications have power constraints that are not present in other applications e.g. ground applications.

Other examples include systems where actuators or other devices are only required periodically, but when they are required, their required operating power exceeds the available input power.

There is, therefore, a need to provide sufficient power to enable wireless communication of data to and/or from such circuits without requiring additional power resources and space or adding weight to the system

### SUMMARY

The present disclosure provides a power control system in which power from a power supply is buffered until a predetermined level of buffered power is available at which time the system activates a device to function powered by the buffered power. Thus, by buffering the available power, a higher power requirement load can be operated periodically e.g. data can be transmitted to/from a wireless transceiver periodically.

### BRIEF DESCRIPTION

Examples of the communication architecture of the present disclosure will now be described with reference to the drawings. It should be noted that other examples are also possible within the scope of the claims.

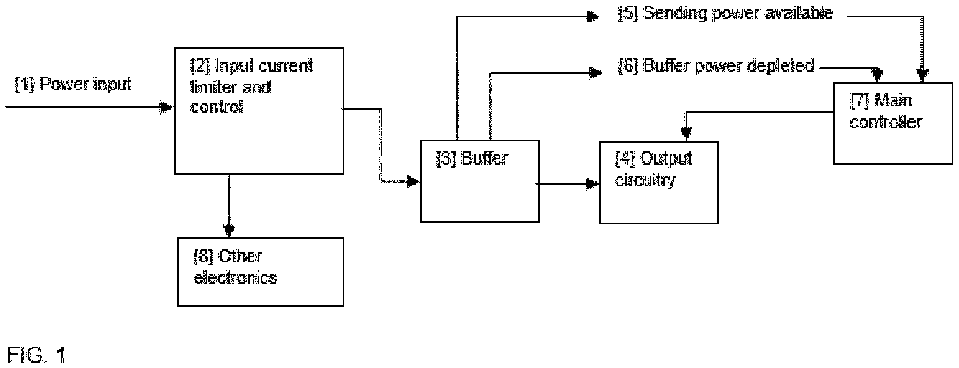

Figure 1 is a schematic diagram showing the principles of the disclosure according to an example.

### DETAILED DESCRIPTION

The solution provided by this disclosure will be described with reference to providing wireless communication to and/or from galley inserts in aircraft but the disclosure is not limited to this application and may be equally applicable to powering devices e.g. actuators that only require periodic power, but the power they require exceeds the input power available.

A galley insert or galley equipment can have a connectivity interface board, CIB, which consists of electronic circuitry including a wireless transceiver used to transmit and receive data and, depending on requirements, may also consist of other circuits for different galley equipment functions. The CIB has a limited power availability which is generally less than that required by the wireless transmitter to function.

To enable the wireless transmitter to transmit/receive data with the available power, the system of this disclosure includes a power buffer 3 that buffers or stores input power 1 over time until enough of the input power 1 has been stored in the buffer to power the wireless transceiver, at which time the transceiver can function to transmit/receive data.

The buffer 3 may issue a command and/or set a flag 5 when the buffered power has reached the predetermined threshold that is sufficient to power the transceiver such that a communication controller 7 may start data transmission/reception.

The data transmission/reception may stop when the level of power from the buffer falls below the threshold required for the transceiver to function. In one example, this may be indicated by a signal and/or a flag 6 when the buffered power drops below the predetermined lower threshold at which time communication of data ceases e.g. a communication controller 7 may then switch off transmission/reception.

Thus, whilst input power 1 continues to be provided to the system, for a portion of that time, there is sufficient power stored in the buffer to power the transceiver to communicate. For example, for each second of input power 1 being provided to the system, the transceiver may be used for 100 ms and, for the other 900 ms it is off while the input power is buffered. This 100 ms 'active' time is therefore completely powered by the buffered power.

Various types of buffer are known and can be used in this system. For example, the power buffering is performed by capacitors (not shown). The input current to the CIB is monitored and the capacitors are charged with a current that is the input power current (e.g. 50 mA) minus the current required for the other CIB electronics 8. The input current to the CIB is limited, the capacitor charge current will vary depending on the other CIB electronics, however, a static periodic sending may be maintained with more of less information, depending on the power. Once the buffer 3 is full, for example buffer capacitors (where used for the buffer) are fully charged, they will stop using the charge current, at which time the CIB input current will drop.

The system includes a trigger that triggers when the buffer 3 contains sufficient power to power operation of the transceiver for one period of data transmission and/or reception. The trigger may be based on detection of the input current drop when the buffer is full or may be based on a timer set when it is expected that the buffer will have sufficient power, or can be based on a voltage level to which the buffer is charged. The level of required electrical power will depend on the transceiver and the requirements of the system and will be predetermined.

The system may be configured to allow the transceiver to communicate whenever the buffer is detected as being full/above a predetermined level of stored power and/or every predetermined period of time e.g. once every second for 100 ms or other appropriate intervals.

Referring to the figure, the current from power input 1 is monitored in this example by an input current limiter and control 2 which monitors the current and also controls the charging of the buffer 3. The amount of charging current is determined by a maximum input current 1 minus the current needed for the additional CIB circuitry 8. When the buffer 3 is sufficiently charged (according to the predetermined required power) it sets a signal (e.g. a '1' or 'high' signal 5) to indicate to the system controller 7 that output circuitry 4 can be enabled. Another signal 6 will be generated when the power in the buffer 3 is at a level (again predetermined) when it can no longer power the output circuitry. In one example, signals 5 and 6 could be on the same line, with the output circuitry 4 being enabled when the signal is high and disabled when the signal is low. Alternatively, as in the example shown, the 'enable' signal 5 may be on one line and the disable signal 6 on another line. In that case, a high signal on line 5 may trigger enabling the output circuitry 4 and a high signal on line 6 may disable the output circuitry 4. It is also conceivable that the output circuitry may be respectively enabled and disabled by low level signals on lines 5 and 6. To reduce complexity, the power can be used for a determined period of time, in which case this signal is not needed.

In one example, the controller 7 can activate the output circuitry 4 (which is e.g. the transceiver or a circuit controlling operation of the transceiver in the example above) when line 5 is in the active state for a predetermined amount of time or until line 6 becomes active. Line 6 has no value without line 5.

The output circuitry 4 (e.g. transceiver or its control circuit or, in other examples, an actuator etc.) can be activated and/or deactivated in any known manner e.g. by chip reset in the circuit, by disconnecting it from the power supply, sending a blocking command, etc.

If there is a need to minimise the size of the system, even at the cost of efficiency, and even with limited input power, a booster converter could be provided between the input current limiter and control 2 and the buffer 3 to supply the buffer, the buffer working on a mid-voltage that can be higher than the input voltage.

The methodology and system described above allows data to be communicated from and to a galley insert with limited power resources if the amount of data to be sent is limited. Whilst large amount of data, or continuous data cannot be sent, the system may be sufficient for galley equipment communication where the data required to be communicated is not extensive and does not need to be sent continuously. Similarly, for other applications, e.g. actuators, the actuators can be operated periodically using power from a power supply that would not otherwise by sufficient to power the actuators.

The system of this disclosure can be incorporated into galley inserts of modern and new aircraft but can also be added to galley inserts on older aircraft where wireless communication was not previously envisaged, or to any other device which requires connectivity, sensors and/or actuators with limited power.

## Claims

1. A power control system including a power supply (1), and buffer means (3) connected to receive power from the power supply and to buffer that power until a predetermined level of buffered power is available at which time the system enables activation of a load (4) to function powered by the buffered power.

2. The power control system of claim 1, wherein the system is configured to disable activation of the load (4) when the buffered power is less than a predetermined level.

3. The power control system of claim 1, wherein the system is configured to disable activation of the load a predetermined period of time after activation has been enabled.

4. The power control system of any preceding claim, whereby the buffer means (3) is converted to a mid-voltage.

5. The power control system of any preceding claim, whereby the buffer means (3) comprises capacitors.

6. The power control system of any preceding claim, comprising an input current limiter and control (2) arranged to monitor the current of the power supply and to charge the buffer means using that current.

7. The power control system of claim 6, wherein the input current limiter and control (2) is configured to determine the amount of the current of the power supply needed to supply other loads and to use the remaining amount of the current of the power supply to charge the buffer means.

8. The power control system of claim 6 or 7, whereby when the buffered power reaches the predetermined power, a signal is generated to enable activation of the load.

9. The power control system of any preceding claim, further comprising a controller (7) to enable activation of the load (4) responsive to the predetermined level of buffered power being available in the buffer means (3).

10. The power control system of any preceding claim, further comprising the load (4).

11. The power control system of claim 10, wherein the load includes means for activation and deactivation of the load.

12. The power control system of any preceding claim, wherein the load (4) includes a wireless transceiver.

13. Aircraft equipment including a power control system according to claim 12, optionally where the aircraft equipment is a galley insert.

14. A method of providing power periodically to activate a load from a power supply, the method comprising buffering power from the power supply until a predetermined level of buffered power is available and then enabling activation of a load (4) to function powered by the buffered power.

15. A method of enabling periodic communication of data to and/or from a wireless transceiver, the method comprising buffering power from the power supply until a predetermined level of buffered power is available and then enabling the communication of data, the transceiver being powered by the buffered power.
